# EUROPEAN PATENT APPLICATION

(11) **EP 2 037 352 A2**
(43) Date of publication of application: **18.03.2009**
(21) Application number: 08397519.3
(22) Date of filing: 26.08.2008
(51) Int. Cl.: G06F 3/042

(54) **Interactive display**

(30) Priority: 12.09.2007 FI 20075637
(71) Applicant: Multitouch OY, 00180 Helsinki (FI)
(72) Inventor: Ilmonen, Tommi, 02110, Espoo (FI); Evans, John Anthony, 00150, Helsinki (FI)
(74) Representative: Lamberg, Samu Petteri

(57) **Abstract**

A display system (10) has a sheet of film (11) to display an image in visible light wavelengths in response to a control signal. The control signal manipulates physical characteristics of the film on desired areas of the film. The system also has: a casing attached to the sheet of film, at least part of the inner side (16a, 16b) of the casing being a mirror; a source of background light (13) inside the casing; and a spreading layer (12, 12a, 12b, 12c) placed between the sheets of film and the background light. The spreading layer is adjacent to the sheets of film and configured to even out the background light arriving at the sheets of film. The display system further has a camera (14) inside the casing behind the sheet of film. The camera is sensitive at predetermined wavelengths outside visible light wavelengths and detects input from the front side of the sheet of film (11). Corresponding multi-display systems and methods are also disclosed.

## Description

### FIELD OF THE INVENTION

The present invention generally relates to data input devices. The invention relates particularly, though not exclusively, to interactive displays and large scale displays.

### BACKGROUND OF THE INVENTION

In the field of large scale interactive displays a display system, wherein an image is projected to a screen by a projector and computer vision is used for detecting user input, is known.

US 2001/0012001 A1 discloses such a display system. The disclosed system comprises a semi-transparent screen and an infrared LED (light emitting diode) panel, a CCD (charge coupled device) camera and a projector provided on the back side of the semitransparent screen. The camera operates on infrared wavelengths and detects infrared light reflected from objects on the other side of the semitransparent screen, when the objects are relatively close to the screen or when they touch the screen. The projector projects visible image light onto the screen. Infrared component of the image projected by the projector may be filtered out. Thereby the projected image does not disturb the camera.

A problem associated with the display systems that are based on projector technology is that projectors are not fully stable devices. They may for example produce significant amount of heat. This heat may cause thermal expansion in components of the projectors, whereby the focus of the image projected by the projector may move. This may cause significant problems especially when large size displays, which require more than one projector for projecting the full image, are concerned. In such case the projectors of the system need to be calibrated such that the amount of points of discontinuity in the produced full image is minimized. Despite of the calibration the points of discontinuity cannot be fully avoided. Moreover, due to the thermal expansion, the focus of individual projectors may move over time and therefore the calibration needs to be repeated from time to time.

Another problem associated with the projectors is that the bulbs used in projectors burn out relatively fast. One bulb may last for example 2000 hours. If the display (and the projector) is on 24 hours a day, the bulb burns out in 3 months. That is, the bulb needs to be changed every 3 months. Furthermore, the system needs to be recalibrated every time the bulb is changed. This clearly causes difficulties and additional costs in long term use of the display systems.

ACM publication "ThinSight: Integrated Optical Multi-touch Sensing through Thin Form-factor Displays" by Izadi et al. discloses another type of interactive displays.

Therein individual infrared emitter/detector pairs placed behind backlight of an LCD (liquid crystal display) display are used to detect objects on or in the vicinity of the LCD display, the LCD display thus operating as an interactive display. The use of an LCD display may overcome many of the problems of the projector-based interactive screens. The disclosed technology however requires number of infrared emitter/detector pairs to be mounted on the system, if input is to be detected on a larger area, whereby production of such interactive displays is laborious and thus high costs may be involved.

Thus there is room for further improvement considerations.

### SUMMARY

According to a first aspect of the invention there is provided a display system comprising:
a sheet of film configured to display an image in visible light wavelengths in response to a control signal, the control signal being configured to manipulate physical characteristics of the film on desired areas of the film;
a casing attached to the sheet of film, at least part of the inner side of the casing being a mirror;
a source of background light inside the casing;
a spreading layer placed behind the sheet of film, said spreading layer being configured to even out the background light arriving at the sheet of film; and
a camera placed inside the casing behind sheet of film, the camera being configured to be sensitive at predetermined wavelengths outside visible light wavelengths and to detect input from the front side of the sheet of film.

The sheet of film may be for example an LCD (liquid crystal display) film.

The predetermined wavelengths outside visible light wavelengths may be for example infrared or ultraviolet wavelengths.

In an embodiment the camera is placed between the sheet of film and the source of background light.

The display system may still further comprise a light source producing light at said predetermined wavelengths outside visible light wavelengths.

In an embodiment the display system further comprises a control unit configured to produce said control signal controlling said sheet of film to display an image, to receive input detected by the camera; and to perform predefined actions responsive to said input.

In a further embodiment the control unit is further configured to eliminate at least one inactive area from the input detected by the camera before further processing of the input. Such inactive area may include for example margins of the sheet of film or an area containing any support structure or the like. As a further example the control unit may be configured to automatically detect edges of one or more sheets of film and to automatically eliminate a predefined margin at the edges from the input data before further processing of the input data.

According to a second aspect of the invention there is provided a multi-display system comprising:
at least two adjacent sheets of film, the sheets of film being configured to display an image in visible light wavelengths in response to a control signal, the control signal being configured to manipulate physical characteristics of a film on desired areas of the film;
a casing attached to the sheets of film, at least part of the inner side of the casing being a mirror;
at least one source of background light inside the casing;
a spreading layer placed behind the sheets of film, said spreading layer being configured to even out the background light arriving at the sheets of film; and
at least one camera placed inside the casing behind the sheet of film, the camera being configured to be sensitive at predetermined wavelengths outside visible light wavelengths and to detect input from the front side of the sheets of film.

In an embodiment at least one camera is placed between the sheets of film and the at least one source of background light.

In an embodiment the multi-display system further comprises a piece of mirror placed in at least one of the junctions between adjacent sheets of film, said piece of mirror being configured to reduce shadowing in said junction.

The multi-display system may further comprise:
a support structure placed in at least one of the junctions between adjacent sheets of film; and
one or more pieces of mirror surrounding said support structure, said pieces of mirror being configured to reduce shadowing caused by said support structure.

The multi-display system may still further comprise:
a connector element providing electronic connection to the sheet of film placed in at least one of the junctions between adjacent sheets of film; and
one or more pieces of mirror surrounding said connector element, said pieces of mirror being configured to reduce shadowing caused by said connector element.

In an embodiment of the multi-display system the camera is configured to detect input from the front side of more than one sheet of film.

In another embodiment, the multi-display system comprises a plurality of cameras, and each camera is configured to detect input from the front side of one sheet of film.

According to a third aspect of the invention there is provided a method of interacting with a user, comprising:
displaying an image to user on a sheet of film configured to display an image in visible light wavelengths in response to a control signal, the control signal being configured to manipulate physical characteristics of the film on desired areas of the film, the sheet of film being attached to a casing, at least part of the inner side of the casing being a mirror, and the casing comprising a source of background light and a spreading layer placed behind the sheet of film, said spreading layer being configured to even out the background light arriving at the sheet of film; and
detecting input given from the front side of the sheet of film by means of camera placed inside the casing behind the sheet of film, the camera being configured to be sensitive at predetermined wavelengths outside visible light wavelengths.

Various embodiments of the present invention have been illustrated only with reference to certain aspects of the invention. It should be appreciated that corresponding embodiments may apply to other aspects and embodiments as well to produce further non-limiting examples.

### BRIEF DESCRIPTION OF THE DRAWINGS

The invention will be described, by way of example only, with reference to the accompanying drawings, in which:
- Fig. 1: shows a block diagram of a system according to an embodiment of the invention;
- Fig. 2: shows a block diagram of a system according to another embodiment of the invention;
- Fig. 3: illustrates operating wavelengths of the system;
- Figs. 4-6: show light source arrangements according to some embodiments of the invention;
- Fig. 7: shows a block diagram of a multi-display system according to an embodiment of the invention;
- Fig. 8: shows a certain detail of the system of Figure 7;
- Fig. 9: shows a block diagram of a multi-display system according to another embodiment of the invention;
- Fig. 10: illustrates a support structure for a multi-display system; and
- Fig. 11: shows a block diagram of a device suited for operating as a control device of various embodiments of the invention.

### DETAILED DESCRIPTION

In the following description, like numbers denote like elements.

In the following examples of various embodiments of the invention an LCD screen is used. The principles of the invention may however be applied to other screens as well. In general a screen that may suit for implementing embodiments of the invention may be formulated to be a screen, which can modulate light transmission in wavelengths that are outside a predetermined wavelength range of computer vision components. In the wavelength range of the computer vision components the screen is fully or partially transparent and either diffusive or non-diffusive. Additionally or alternatively, the screen may be formulated to be a panel, in which a certain point of an image to be produced is tied into a physical location on the panel and/or in which an image on the panel is produced by changing physical characteristics of the panel in desired areas of the panel.

Benefits that may be achieved by using LCD screens include better image quality and reduced heat production compared to projector technology. In an LCD certain point of the produced image is tied into certain physical location on the screen.

Thereby in LCD the image does not move. Thus large scale displays are easier to achieve and there is no need for such calibration effort as with projectors.

In prior art systems that are based on projector technology, there is no direct mapping between the projected image and the projection surface. Thus, even if the camera used in the prior art systems would be able to detect the exact edges of the display surface one cannot calibrate the computer vision algorithms automatically as the actual projection area might not match the display surface. Thus, to determine the parameters that govern the transformation from camera co-ordinates to display co-ordinates one needs to do manual calibration. This problem may be avoided by using LCD screen or the like as defined in various embodiments of the invention as therein the image that is displayed is tied into specific area of the display area.

In prior art systems that are based on LCD technology, the systems do not provide fully even background illumination of the LCD film in the visible wavelengths. The present invention aims at creating a background light that is mathematically perfect, as described in later sections.

In a particular embodiment of the invention a camera is placed between a LCD film and background light source, whereby light transmission to the camera is not blocked. It is however not straightforward to do this because as such the camera placed in such position would cause shadowing in the display, whereby the users of the system might be able to see the camera through the LCD film or at least the viewing experience would deteriorate.

A casing with a mirror on an inner side is used for avoiding or reducing the shadowing possibly caused by the camera as well as shadowing possibly caused by infrared lightning equipment, if present in the system. As light reflects from the mirror inner side the gaps in lightning of the LCD film possibly caused by shadowing may be compensated.

As a camera is used as means of detecting input in various embodiments of the invention, one may achieve a cheaper solution that with using plurality of emitter/detector pairs. The reason for this is firstly that one camera may cover larger area than one emitter/detector pair, whereby smaller number of components is needed, and secondly that less work may be involved in production of the system as smaller number of components are needed. However as an LCD screen, or the like, is used, one achieves the benefits provided by use of LCDs.

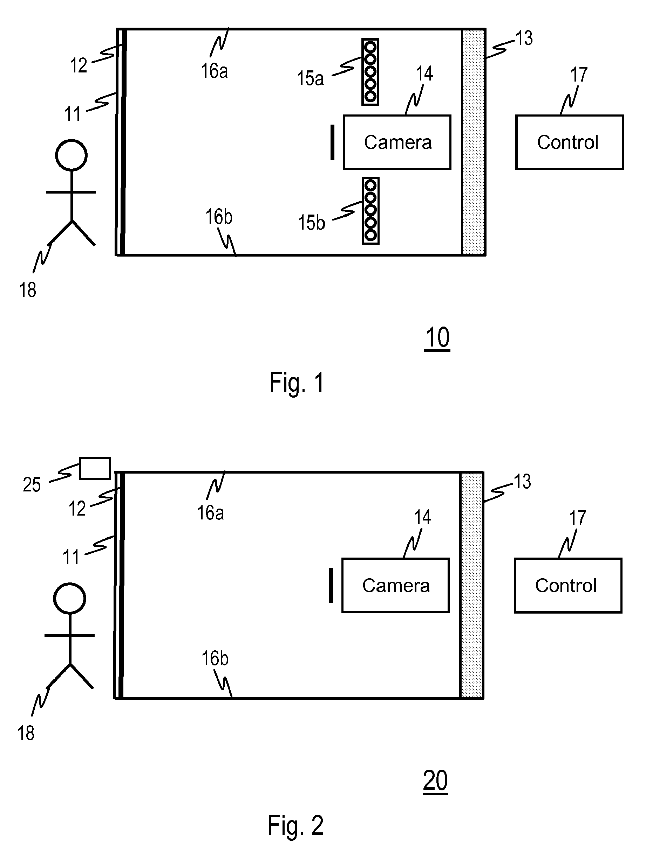

Figure 1 shows a block diagram of a system 10 according to an embodiment of the invention. The system comprises an LCD film 11 and a spreading layer 12 behind the LCD film. Behind the LCD screen there is background light source 13, which may be for example a rectangular fluorescent light which typically has the same dimensions as the LCD film. The purpose of the spreading layer 12 is to spread the light coming from the background light source, so that an image displayed on the LCD film can be viewed from many directions. This spreading can be achieved with a diffusion film or with a holographic rear-projection film. The spreading layer 12 behind the LCD film 11 results in a further substantial advantage by reducing glossy reflections behind the LCD which reflections impair the operation of machine sight by a camera (which will be explained with more detail in the following). Moreover, by locating the spreading layer 12 behind the LCD film 11 a better can be achieved than if the spreading layer were placed in front of the LCD film 11, as then no unnecessary reflecting layers are added between the LCD film 11 and viewer of the system 10.

Also a camera 14 is placed behind the LCD screen. The camera is configured to detect signals that are outside the visible light wavelengths (e.g. infrared signals). There may be for example a filter in front of the lens of the camera providing this effect. The camera may be based on for example CCD (charge-coupled device) or CMOS (complementary metal-oxide-semiconductor) technology. Additionally there are infrared light sources 15a and 15b enabling input detection on infrared wavelengths. The infrared light sources may be for example infrared LEDs.

The side walls 16a and 16b of the system are preferably coated from the inner side with some mirror in order to deliver maximum amount of light to the LCD film and finally to users of the system. The side walls may be for example mirror walls. By means of the mirroring side walls one may avoid or at least reduce shadows that may be caused to the background light by the camera. The mirroring side walls may help in delivering the background light to the LCD film in a way that the light can be spread to the users without allowing users to see details inside the system through the LCD film and at the same time improving the viewing angle of the system. In addition to the mirroring side walls (or mirror casing) the spreading layer 12 may help to achieve this effect. Mirror walls are particularly efficient in providing a consistent background illumination on the LCD film 11. It is appreciated that mirror walls may on one hand contribute to higher risk of harmful glossy reflection to the camera from under the LCD, as any reflection from the back of the system is consistently mirrored towards the LCD film 11. However, the spreading layer 12 when placed under the LCD film 11 provides a further synergic effect by reducing the gloss behind the LCD as experienced by the camera. Hence, any remainder of such reflections is more smoothly reflected on the camera and thus impairs significantly less the detection of shadows through the LCD 11. This is particularly useful under bright daylight.

Generally, a very effective way to produce even lighting to an LCD element is to place a very large background light behind the screen. Such large background light sources are, however, impractical. By using highly reflective mirrors laid out perpendicular to the display screen it is possible to simulate the effect of a large background light. In this method the reflection of light from the mirrors matches exactly the light radiation that would be coming from a very large background light. Hence, an even illumination on the actual LCD panel, as if a large and consistent background light were used. It is appreciated that using some simple reflective (somewhat matte) side walls does not provide the same result as such approach does not produce a light-field corresponding to a large and perfectly even background light.

Furthermore the system comprises a control unit 17, which is configured to control operation of the system. The control unit may be for example a general purpose computer supplied with suitable software or it may be a special purpose computing device designed for this purpose. In order to be able to control the components of the system there are clearly connections between the control unit and the components, but those connections are not shown for the sake of clarity. Finally, a user 18 of the display system is located in front of the LCD screen.

The system of Figure 1 operates as follows:
- The control unit 17 controls the LCD film to show the desired image. The user 18 sees this image on the display.
- The infrared lights produce infrared light that reflects from user's 18 finger, for example, when the finger is brought close to the LCD film.
- The camera detects the reflected infrared light and correspondingly provides a detection signal to the control unit.
- The control unit processes the detection signal and may perform a predefined action based on the detected input. The control unit may for example change the image that is displayed on the LCD film.

Furthermore there may be a mechanism for detecting the amount of infrared light that is available in the system and the operation of the infrared lights 15a and 15b may be controlled (e.g. by the control unit 17) accordingly. For example, if there is significant amount of infrared light in the environment in which the display system is residing, the infrared lights may be turned of. The amount of ambient infrared illumination may be detected with a specific infrared sensor, or by using the camera 14 that is already used for hand tracking.

It should be noted that the camera 14 and the infrared LEDs 15a and 15b cannot be seen from the outside of the system since they cast virtually no shadow due to the highly diffused illumination coming from the background lights as the reflective inner side of the system provides even lighting to the display surface. Further, the spreading layer 12 may prevent the users from seeing any details from inside the system.

The distance between the background light source and the screen may generally depend on the space that the camera setup requires. One may shorten the distance by moving the camera forward, turning the camera around (to point away from the screen) and / or by using a mirror in front of the camera to capture the activities on the screen.

Figure 2 shows a block diagram of a system 20 according to another embodiment of the invention. The system corresponds to that of Figure 1 other than that now there are no infrared LEDs inside the system. Instead there is an infrared light source 25 outside the system.

Instead of the infrared light source or infrared LEDs of the above examples also some other wavelength outside the visible light wavelengths may be used in the input detection. In an embodiment, ultraviolet wavelengths are used. That is, the camera of the system is configured to operate on ultraviolet wavelengths. In this case it may be however beneficial to employ only ultraviolet light that is readily available in the environment outside the display system as having an ultraviolet light lamp in the system may not be healthy for the users of the display.

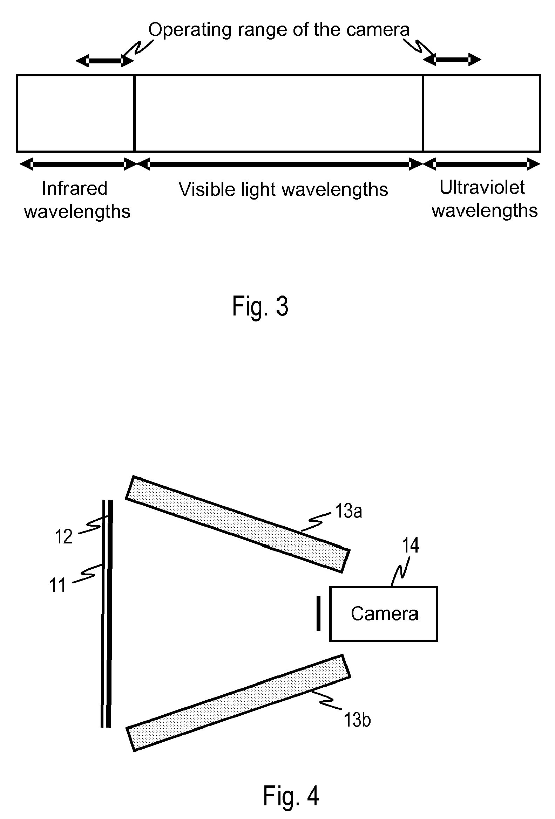

Figure 3 illustrates operating wavelengths of the system. In the middle there are the visible wavelengths. This area includes approximately the wavelengths between 400 and 700 nm. Below the visible light wavelengths there are ultraviolet wavelengths and above the above the visible light wavelengths there are infrared wavelengths. The operating range of the camera / computer vision components of the system is arranged to be outside the visible light wavelengths, for example in the infrared (IR) wavelengths or ultraviolet (UV) wavelengths. This can be achieved for example with a suitable filter in front of the camera lens. The range, which can be achieved with a certain camera, depends on the characteristics of the components of the camera. Typically the achievable operating range extends beyond the visible light wavelengths, whereby the use of the camera in the IR or UV wavelengths is possible.

It is possible that an LCD film causes some modulation even in the IR range, especially if the IR filter on the camera has been selected so as to include IR radiation close to the visible spectrum. As the image displayed on the LCD is available to the computer vision system and/or the control unit controlling the system, the display image can be eliminated from the image detected by the camera by subtracting a properly scaled and gamma-corrected version of the display image from the detected camera image, for example.

Figures 4-6 show light source arrangements according to some embodiments of the invention. The systems of the Figures correspond to that of Figure 1 other than that now different arrangements are shown for the background light source. Additionally, some of the details shown in Figure 1 are not shown for the sake of clarity.

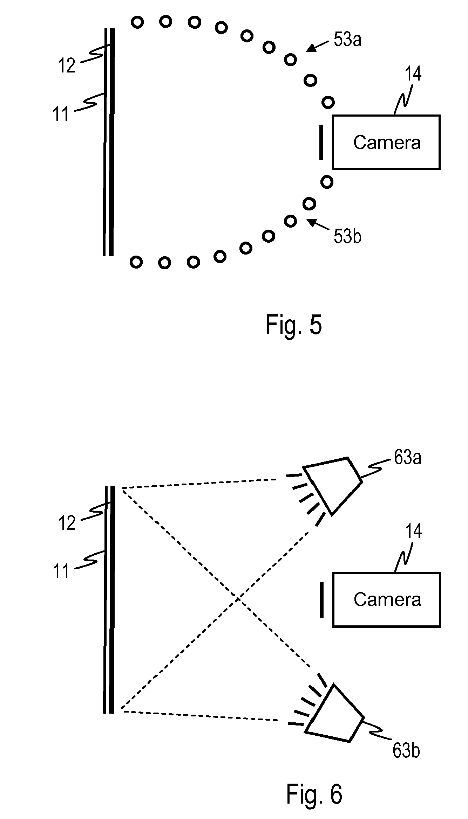

In Figure 4, there are two fluorescent lights 13a and 13b placed in an angle on both sides of the camera 14. In Figure 5, two rows of point light sources 53a and 53b are placed on both sides of the camera 14. If the number of point light sources is large enough, they may produce homogenous background lighting, which may be comparable to a larger light source. One could also use individual, powerful light sources (for example halogens), but it is possible that such light sources may be seen as highlights through the LCD film.

In Figure 6, there are two spotlight -type light sources 63a and 63b on both sides of the camera 14. This arrangement may be suitable for example if a holographic reflection layer is used as the spreading layer 12 to distribute or even out the background light. In that case even one spotlight 53a may suffice. In this case the users of the system cannot see the camera as it is not interfering with the light coming from the spotlights. Obviously one can include IR light sources in this system the same way as shown in figure 1.

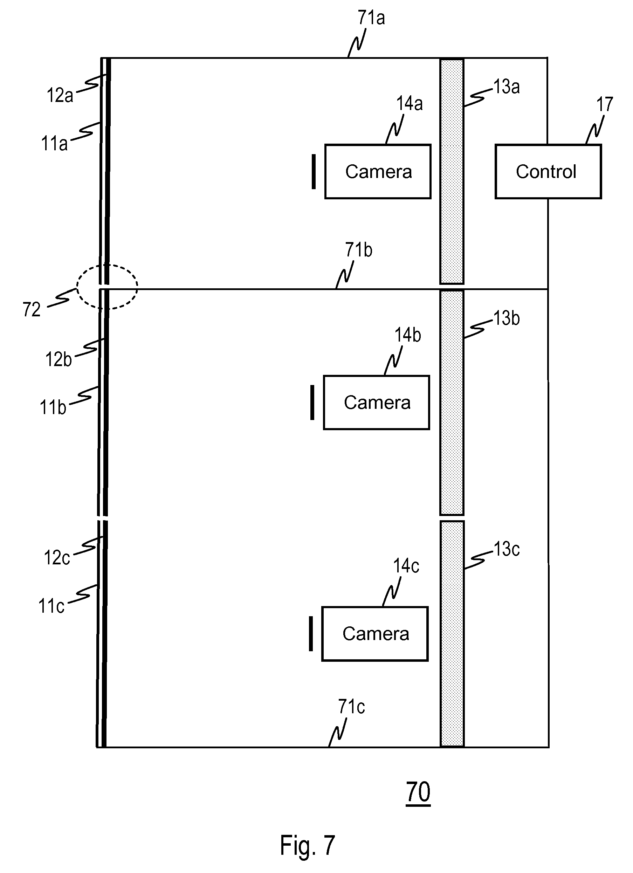

Figure 7 shows a block diagram of a multi-display system 70 according to an embodiment of the invention. Now there are three LCD films 11 a-11 c, three diffusion layers 12a-12c, three background light sources 13a-13c, and three cameras 14a-14c. One control unit 17 controls operation of all components of the system. Alternatively there might be more than one control unit.

Now also connections 71a-71c between the LCD films and the control unit are shown. As there is physical wiring and/or an electronics sheet coming out of each LCD film, discontinuity in the full display image may be caused in the area 72. For the LCD films residing on the edge of the display it is possible to arrange that the wiring comes out from the edge of the display as shown for LCD films 11a and 11c, whereby no discontinuity is caused. However, for the LCD films surrounded by other LCD films this possibility does not exist. Simply drawing the wiring straight back from the LCD film towards the back of the system would result in shadows on the display, especially close to the LCDs. Another possibility might be to draw the wiring between the LCD films, but also this may cause shadows as the amount of wiring can be significant. This can also be mechanically difficult as the wires might need to be very long, making them susceptible to problems in the electronic signal transfer.

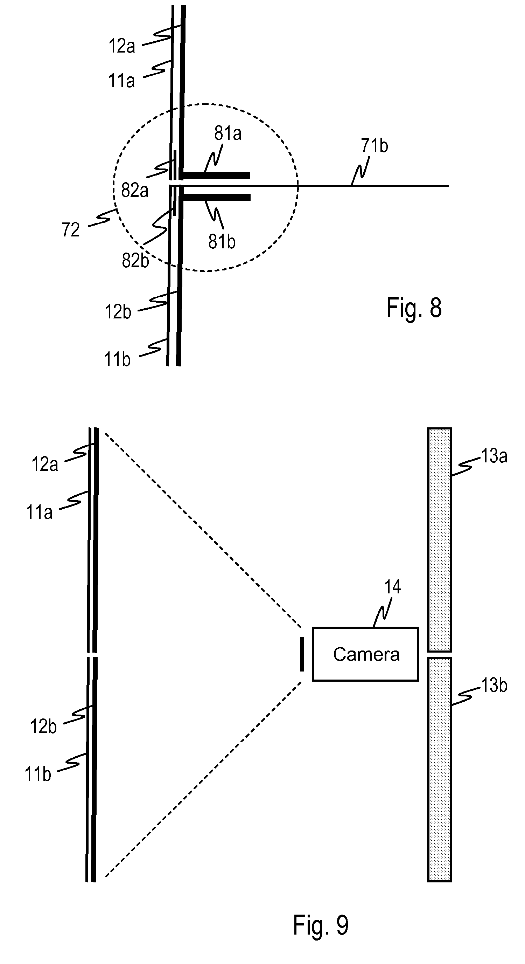

In an embodiment of the invention this discontinuity problem is solved by using mirrors as shown in Figure 8. Figure 8 shows the area 72 of Figure 7 in more detail. Now mirrors 81 a and 81 b have been placed around the electronics sheet and/or wiring 71 b coming out of the LCD film 12b. As the background light is fully symmetric and mirrors - while shadowing the edge of the screen - reflect the same amount of light back (based on the mirror-source principle), even illumination is produced even at the edges of the LCDs 11a and 11 b. The mirrors do not need to reach too far backwards from the LCDs as the wiring cannot cast significant shadows further away from the display. It must be noted that the mirrors may shadow the part of the LCD film which is exactly beneath the mirror. As the image of a typical LCD film does not go quite to the edge of the physical film (there is a small margin 82a, 82b in the edge of the film), the shadow of the mirror however falls to an area where typical LCD film cannot produce image anyhow and thereby no additional disturbance of the display image is caused.

As mentioned there are different ways of drawing the wiring of the display (e.g. drawing them between the LCD films). Also in these cases one can use mirrors to suppress shadowing around the wires.

It is possible that the whole wire is covered with some reflective material, which may be mirror or some other mirror-like material. Also some other type of placement of mirrors material may be suitable for achieving the same image-source effect. In addition to the control wiring/sheet, one can also place a thin sheet of metal between the mirrors 81 a and 81 b in order to make the construction more stable. The mirror arrangement shown in Figure 8 can be used between adjacent LCD films also with the sole purpose of making the construction mechanically more stable (i.e. without having the control wiring/sheet between the mirrors). In these cases the cameras of the system can be placed directly behind the LCD seams, as shown in figure 9. In this way a single camera can be used to track activities in up to 4 screens.

It must be noted that also more than three screens may be used to achieve a large scale display. Such a system may comprise more than one camera in order to be able to track whole display area. In some settings one camera may however suffice.

Figure 9 shows a block diagram of a multi-display system according to another embodiment of the invention. The system corresponds to that shown in Figure 7 other than that now only two uppermost screens 11 a and 11 b are shown and that now the camera is placed in between the background light sources 13a and 13b. In this way one camera may detect input from the area of two screens, whereby the overall number of cameras in the system may be reduced.

In yet another embodiment of the invention more than one camera may be used for tracking input from one screen.

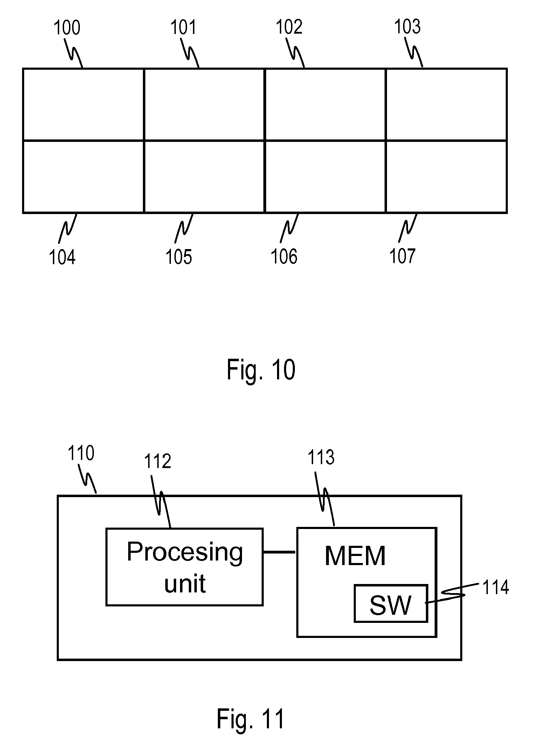

If multiple displays are used in the system, there may be a need to have some kind of support structure for keeping the panels together. Figure 10 illustrates an example of a support structure that may be used in a multi-display system. A front view of a multi-display system comprising eight screens 100-107 is shown. The system comprises an aluminum frame supporting the screens. Now if the frame is attached to the screens as such, the frame will produce shadows in the junctions of the screens. The solution discussed in connection with Figure 8 may be used for avoiding (or at least diminishing) these shadows. That is, the aluminum frame may be covered by mirrors. Further, the frame may be composed of thin strips that cause minimal shadowing right beneath the strips.

It should also be appreciated that the display units may be independent block-like structures that are stacked right next to each other. This approach may be more cost-effective than building multi-LCD units, as the individual blocks can be mass-produced and configured later on to create a multi-LCD display.

The control of the system of various embodiments of the invention may be implemented by means of a computer program running on a suitable hardware platform or by means of any other suitable combination of hardware, software, special purpose circuits and/or logic.

Figure 11 shows a block diagram of an apparatus 110 suited for operating as the control device. The apparatus 110 may be a typical computer, such as a general-purpose computer or a server, with possibly distributed functions. The apparatus comprises a processing unit 112 for controlling the apparatus and a memory 113 including a computer program code or software 114. The processing unit 112 may be a central processing unit (CPU) or a master control unit MCU or alternatively, a microprocessor, a digital signal processor, an application specific integrated circuit, a field programmable gate array, a microcontroller or a combination of such elements.

The software 114 includes instructions for the processing unit 112 to control the apparatus 110 and may comprise instructions for controlling the apparatus to operate as a control unit 17 according to some embodiments of the invention and to control the operation of the LCD screens, infrared light sources and cameras for example. Typically the apparatus also comprises an input for receiving data from one or more cameras and the software comprises instructions for processing the data received from the cameras.

The software that is processing the image data received from one or more cameras may be configured to automatically detect the edges of the LCD screens and calibrate the parameters that govern the transformation from camera co-ordinates to screen-co-ordinates. Additionally the software may be configured to automatically eliminate the parts of the image that are not part of the active LCD film (for example LCD margins and any support structures) from the input processing.

The apparatus 110 may further comprise a user interface or other additional components, but those are not shown here for the sake of conciseness.

It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A display system (10, 20, 70) comprising:
a sheet of film (11, 11a, 11b, 11c) configured to display an image in visible light wavelengths in response to a control signal, the control signal being configured to manipulate physical characteristics of the film on desired areas of the film;
a casing attached to the sheet of film, at least part of the inner side (16a, 16b) of the casing being a mirror;
a source of background light (13, 13a, 13b, 13c, 53a, 53b, 63a, 63b) inside the casing;
a spreading layer (12, 12a, 12b, 12c) placed between the sheet of film and the background light, said spreading layer being adjacent to the film and configured to even out the background light arriving at the sheet of film;
a camera (14, 14a, 14b, 14c) placed inside the casing behind the sheet of film, the camera being configured to be sensitive at predetermined wavelengths outside visible light wavelengths and to detect input from the front side of the sheet of film (11, 11a, 11b, 11c).

2. A display system according to claim 1, further comprising a light source (15a, 15b, 25) producing light at said predetermined wavelengths outside visible light wavelengths.

3. A display system according to claim 1 or 2, wherein the camera is placed between the sheet of film and the source of background light.

4. A display system according to any one of claims 1-3, further comprising a control unit (17, 110) configured:
to produce said control signal controlling said sheet of film (11, 11a, 11 b, 11c) to display an image;
to receive input detected by the camera (14, 14a, 14b, 14c);
to process the input detected by the camera; and
to perform predefined actions responsive to said input.

5. A display system according to claim 4, wherein the control unit (17, 110) is further configured to eliminate at least one inactive area from the input detected by the camera before further processing of the input.

6. A display system according to any one of claims 1 to 5, wherein the sheet of film (11, 11a, 11b, 11c) is an LCD (liquid crystal display) film.

7. A multi-display system comprising:
at least two adjacent sheets of film (11a, 11 b, 11c), the sheets of film being configured to display an image in visible light wavelengths in response to a control signal, the control signal being configured to manipulate physical characteristics of a film on desired areas of the film;
a casing attached to the sheets of film, at least part of the inner side of the casing being a mirror;
at least one source of background light (13a, 13b, 13c) inside the casing; and
a spreading layer (12, 12a, 12b, 12c) placed between the sheets of film and the background light, said spreading layer being adjacent to the sheets of film and configured to even out the background light arriving at the sheets of film;
at least one camera (14a, 14b, 14c) placed inside the casing behind the sheet of film, the camera being configured to be sensitive at predetermined wavelengths outside visible light wavelengths and to detect input from the front side of the sheets of film (11a, 11 b, 11c).

8. A multi-display system according to claim 7, wherein the at least one camera is placed between the sheets of film and the at least one source of background light.

9. A multi-display system according to claim 7 or 8, further comprising a piece of mirroring material (81a, 81b) placed in at least one of the junctions (72) between adjacent sheets of film, said piece of mirroring material being configured to reduce shadowing in said junction.

10. A multi-display system according to any one of claims 7 to 9, further comprising:
a support structure placed in at least one of the junctions (72) between adjacent sheets of film; and
one or more pieces of mirroring material (81 a, 81 b) surrounding said support structure, said one or more piece of mirroring material being configured to reduce shadowing caused by said support structure.

11. A multi-display system according to any one of claims 7 to 10, further comprising:
a connector element (71 b) providing electronic connection to the sheet of film placed in at least one of the junctions (72) between adjacent sheets of film; and
one or more pieces of mirroring material (81 a, 81 b) surrounding said connector element, said one or more pieces of mirroring material being configured to reduce shadowing caused by said connector element.

12. A multi-display system according to any one of claims 7 to 11, wherein said camera is configured to detect input from the front side of more than one sheet of film.

13. A multi-display system according to any one of claims 7 to 12, comprising a plurality of cameras, wherein each camera is configured to detect input from the front side of one sheet of film.

14. A multi-display system according to any one of claims 7 to 13, wherein the sheet of film (11a, 11b, 11c) is an LCD (liquid crystal display) film.

15. A method of interacting with a user, comprising:
displaying an image to user on a sheet of film (11, 11 a, 11 b, 11c) configured to display an image in visible light wavelengths in response to a control signal, the control signal being configured to manipulate physical characteristics of the film on desired areas of the film, the sheet of film being attached to a casing, at least part of the inner side (16a, 16b) of the casing being a mirror, and the casing comprising a source of background light (13, 13a, 13b, 13c, 53a, 53b, 63a, 63b) and a spreading layer (12, 12a, 12b, 12c) placed between the sheet of film and the background light, said spreading layer being adjacent to the film and configured to even out the background light arriving at the sheet of film; and
detecting input given from the front side of the sheet of film (11, 11a, 11 b, 11c) by means of a camera (14, 14a, 14b, 14c) placed inside the casing behind the sheet of film, the camera being configured to be sensitive at predetermined wavelengths outside visible light wavelengths.
